# EUROPÄISCHE PATENTSCHRIFT

(11) **EP 2 744 734 B1**
(45) Veröffentlichungstag und Bekanntmachung des Hinweises auf die Patenterteilung: **03.06.2015**
(21) Anmeldenummer: 12753097.0
(22) Anmeldetag: 15.08.2012
(51) Int. Cl.: B65G 23/44

(54) **FÖRDERANLAGE**
CONVEYING UNIT
INSTALLATION DE CONVOYAGE

(30) Priorität: 17.08.2011 DE 102011110477
(43) Veröffentlichungstag der Anmeldung: 25.06.2014
(73) Patentinhaber: ThyssenKrupp Industrial Solutions AG, 45143 Essen (DE)
(72) Erfinder: MENDL, Thomas, 40789 Monheim (DE)
(74) Vertreter: Braun-Dullaeus Pannen Patent- und Rechtsanwälte
(86) Internationale Anmeldenummer: PCT/EP2012/065927
(87) Internationale Veröffentlichungsnummer: WO 2013/024110

(56) Entgegenhaltungen:
- DE-U1-202005 017 878

## Beschreibung

Die vorliegende Erfindung betrifft eine Flachkopfstation für eine Bandanlage mit einem Förderband und eine solche Bandanlage, auf dem Schüttgut in einer Förderrichtung förderbar ist, wobei die Flachkopfstation endseitig am Förderband sich auf einem Untergrund abstützend anordbar ist und auf die eine Bandspannkraft durch das Förderband wirkt.

### STAND DER TECHNIK

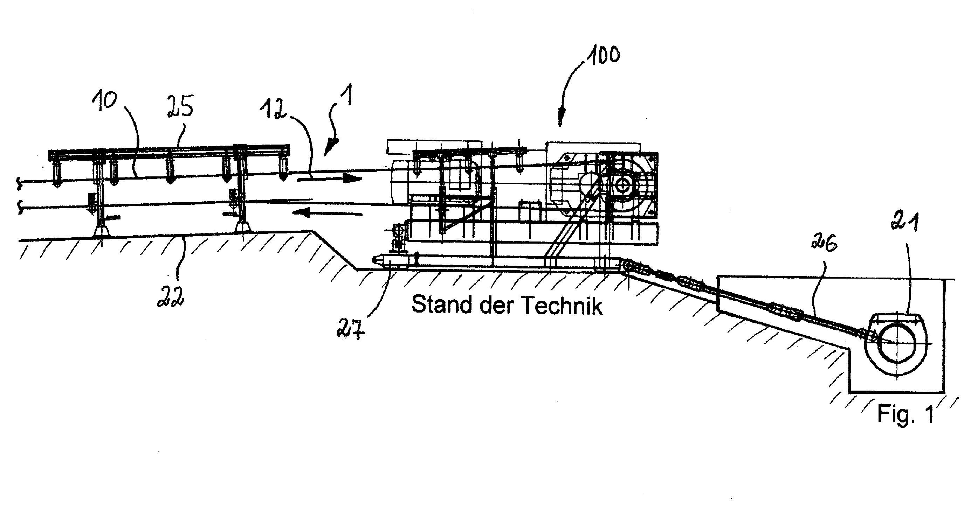

Figur 1 zeigt beispielhaft eine aus dem Stand der Technik bekannte Flachkopfstation 100 für eine Bandanlage 1 mit einem Förderband 10, auf dem nicht näher gezeigtes Schüttgut in einer Förderrichtung 12 förderbar ist. Die Bandanlage 1 weist in Abhängigkeit ihrer Länge eine Vielzahl von Bandgerüstelementen 25 auf, und das Förderband 10 kann eine Länge von beispielsweise mehreren Kilometern annehmen. Die Flachkopfstation 100 ist dabei am Ende des Förderbandes 10 auf einem Untergrund 22 aufgestellt, der ein sogenanntes Planum bilden kann.

Die Bandspannkraft, die von der Flachkopfstation 100 in das Förderband 10 gehalten werden muss, kann mehrere Tonnen betragen. Um diese sehr große Bandspannkraft durch die Flachkopfstation 100 abzustützen, ist ein Verankerungsmittel 21 vorgesehen, das im Untergrund 22 eingelassen ist und das über eine Abspannung 26 mit einem Ponton 27 der Flachkopfstation 100 verbunden ist, mit dem die Flachkopfstation 100 auf dem Untergrund 22 aufliegt. Durch das Verankerungsmittel 21, das beispielhaft als Erdanker gezeigt ist, wird gewährleistet, dass die Flachkopfstation 100 trotz der großen an dieser angreifenden Bandspannkraft eine ortsfeste Position auf dem Untergrund 22 beibehält, und beispielsweise nicht entgegen der Förderrichtung 12 ins Rutschen gelangt.

Entlang eines solchen Förderbandes kann ein Bandschleifenwagen mit einem Förderausleger verfahren, und durch den Bandschleifenwagen kann über den Förderausleger das Schüttgut vom Förderband abgeladen werden. Der Bandschleifenwagen kann dabei über der gesamten Länge des Förderbandes verfahren, wobei eine Halde, auf die das Schüttgut abgeladen wird, durch den Bandschleifenwagen zeilenförmig abgefahren und damit aufgeschüttet wird. Hat der Bandschleifenwagen auf der Strecke entlang der aktuellen Position des Förderbandes hinreichend Schüttgut vom Förderband abgeladen, so muss die Bandanlage mit der Flachkopfstation quer zur Förderrichtung versetzt werden. Hierzu sind Rückraupen bekannt, die entlang der Erstreckungsrichtung des Förderbandes verfahren, und das Förderband kann gemäß einem vorgegebenen Versatz mit den Rückraupen quer zur Förderrichtung versetzt werden. Folglich muss auch die Flachkopfstation seitlich versetzt werden, wodurch die Entnahme des Verankerungsmittels aus dem Untergrund erforderlich wird. Dabei kann die Flachkopfstation ebenfalls durch ein entsprechendes Fahrzeug in seitliche Richtung gezogen oder geschoben werden, und der Erdanker muss in der neuen Position der Flachkopfstation erneut im Untergrund vergraben werden.

Aus der DE 20 2005 017 878 U1 ist eine Flachkopfstation mit einem Erdanker bekannt, der dazu dient, die vom Förderband in die Flachkopfstation eingeleitete Bandspannkraft gegen den Untergrund abzustützen, um die ortsfeste Position der Flachkopfstation auf dem Untergrund beizubehalten. Der Erdanker ist dabei so ausgeführt, dass dieser auf vereinfachte Weise aus dem Untergrund entnommen und nach einem seitlichen Versatz der Flachkopfstation in den Untergrund wieder eingebracht werden kann. Der Ablauf der Entnahme und des erneuten Einbringens des Erdankers in den Untergrund wird damit beschrieben, dass in einem Abstand hinter der Flachkopfstation eine Erdgrube ausgehoben wird, in die der Erdanker eingesetzt wird. Danach erfolgt eine Befüllung des Erdankers mit leicht entfernbarern Material, und es ist beispielhaft angegeben, dass das Material durch das entnommene Erdreich gebildet wird. Anschließend wird dieses verdichtet. Der Erdanker ist dabei als offener Erdankerkasten ausgeführt und kann somit aus dem Untergrund entnommen werden.

Trotz der vereinfachten Ausführung des Verankerungsmittels ist eine Vielzahl von erforderlichen Arbeitsschritten notwendig, um den Erdanker aus dem Untergrund zu entnehmen und erneut in diesen einzubringen, wenn die Flachkopfstation quer zur Förderrichtung des Förderbandes versetzt werden muss.

### OFFENBARUNG DER ERFINDUNG

Es ist daher die Aufgabe der vorliegenden Erfindung, eine Flachkopfstation für eine Bandanlage mit einem Förderband sowie eine solche Bandanlage zu schaffen, die auf vereinfachte Weise seitlich zur Förderrichtung des Förderbandes versetzt werden kann.

Diese Aufgabe wird ausgehend von einer Flachkopfstation für eine Bandanlage mit einem Förderband gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Flachkopfstation ein Fahrwerk aufweist, mit dem die Flachkopfstation quer zur Förderrichtung auf dem Untergrund verfahrbar ist.

Durch die erfindungsgemäß fahrbare Ausführung der Flachkopfstation kann diese quer zur Förderrichtung des Förderbandes dann verfahren werden, wenn das Förderband, mit der Vielzahl der Bandgerüstelemente, seitlich verrückt wird. Die Flachkopfstation ist hierfür verankerungsmittelfrei, insbesondere erdankerlos ausgeführt. Durch die Verfahrbarkeit der Flachkopfstation quer zur Förderrichtung und die verankerungsmittelfreie Ausführung der Flachkopfstation ergeben sich erhebliche Vorteile beim seitlichen Verrücken der Bandanlage. Die Bandanlage wird in der Regel durch Rückraupen, der in Förderrichtung des Förderbandes an diesem entlang verfahrbar sind, seitlich versetzt. Gelangt eine Rückraupe in die Nähe des Endes der Bandanlage, an dem die Flachkopfstation angeordnet ist, so kann die Flachkopfstation durch das Fahrwerk in seitliche Bewegung versetzt werden, um mit dem seitlichen Versatz der Bandanlage gleichermaßen zu verfahren. Hat die Flachkopfstation die neue Sollposition erreicht, kann diese ohne Verwendung eines weiteren Erdankers die Funktion zur Einbringung der Bandspannkraft in das Förderband wieder aufnehmen. Hierzu kann beispielsweise das Fahrwerk der Flachkopfstation leicht lenkbar sein.

Im Rahmen der vorliegenden Erfindung betrifft die Verfahrrichtung der Flachkopfstation quer zur Förderrichtung des Förderbandes jede Richtung, die von der Längsrichtung des Förderbandes, nämlich der Förderrichtung des Schüttgutes, abweicht. Folglich kann die Flachkopfstation unter jedem Winkel durch das Fahrwerk verfahren werden, wobei der Winkel zwischen der Verfahrrichtung und der Förderrichtung einen Wert größer 0° und kleiner 180° aufweist, bevorzugt beträt die Verfahrrichtung quer zur Förderrichtung des Förderbandes jedoch etwa 90° zur Förderrichtung.

Vorteilhafterweise kann das Fahrwerk der Flachkopfstation Fahrketten aufweisen, die sich insbesondere quer zur Förderrichtung erstrecken. Beispielsweise kann das Fahrwerk zwei Fahrketten besitzen, die parallel und beabstandet zueinander das Fahrwerk der Flachkopfstation bilden. Die Flachkopfstation ist dabei ohne Ponton ausgeführt, das durch das Fahrgestell und die Fahrketten ersetzt ist. Auch im Betrieb der Flachkopfstation lastet daher das Gewicht der Flachkopfstation auf den Fahrketten des Fahrwerks.

Das Fahrwerk kann mit weiterem Vorteil angetrieben ausgeführt sein, sodass die Flachkopfstation selbstfahrend ausgeführt ist, insbesondere kann die Flachkopfstation eine vorzugsweise elektrische Fahrantriebseinheit aufweisen. Die Fahrantriebseinheit kann im Fahrwerk der Flachkopfstation integriert sein. Eine Stromversorgung der elektrischen Fahrantriebseinheit kann durch Elektroleitungen entlang des Förderbandes bereitgestellt werden, und es kann für die Flachkopfstation wenigstens eine Bandantriebseinheit vorgesehen sein, mit der das Förderband insbesondere mittels einer vom Förderband teilumschlungenen Antriebstrommel angetrieben wird. Damit ist die Flachkopfstation bereits elektrifiziert, sodass sich eine elektrische Fahrantriebseinheit zum Verfahren der Flachkopfstation mittels des Fahrwerks bevorzugt anbietet.

Gemäß einer weiteren vorteilhaften Ausbildung der Flachkopfstation kann diese eine Gesamtmasse aufweisen, die derart bestimmt ist, dass die Flachkopfstation auch bei Aufbringen der Bandspannkraft eine ortsfeste Position auf dem Untergrund beibehält, insbesondere wenn die Flachkopfstation frei von Verankerungsmitteln ausgeführt ist. Die Gesamtmasse der Flachkopfstation kann dabei größer sein als der Quotient aus der Bandspannkraft und dem Reibungskoeffizienten p des Untergrundes. Der Reibungskoeffizient µ bestimmt sich durch die Reibpaarung zwischen der Flachkopfstation und dem Untergrund, und die Reibpaarung kann gebildet sein durch die Fahrketten des Fahrwerks der Flachkopfstation und dem Untergrund, der beispielsweise durch das Schüttgut selbst gebildet sein kann. Dabei können sich Reibungskoeffizienten ergeben, die einen Wert von beispielsweise zwischen µ = 0,3 bis µ = 0,8, bevorzugt zwischen µ = 0,4 bis µ = 0,7 und besonders bevorzugt zwischen µ = 0,5 und µ = 0,6 aufweisen. Wenn die Reibungskraft, die überwunden werden muss, um die auf den Fahrketten stehende Flachkopfstation auf dem Untergrund seitlich zu verschieben, größer sein muss als die gesamte Bandspannkraft, die vom Förderband auf die Flachkopfstation wirkt, damit die ortsfeste Position der Flachkopfstation sichergestellt ist, so muss die Gesamtmasse der Flachkopfstation größer sein als der Quotient aus der Bandspannkraft und dem Reibungskoeffizienten µ.

Beispielsweise kann die Bandspannkraft 30 Tonnen betragen, und das Förderband ist durch einen Obergurt und einen Untergurt gebildet, die die Antriebstrommel umschlingen. Bei einer gesamten Bandspannkraft von 30 Tonnen und einem Reibungskoeffizienten des Untergrundes von beispielsweise µ = 0,6 ergibt sich damit unter Einrechnung eines Sicherheitsfaktors eine Mindestmasse der Flachkopfstation von beispielsweise wenigstens 60 Tonnen.

Um die Gesamtmasse der Flachkopfstation entsprechend zu bestimmen, kann diese wenigstens eine Ballastmasse aufweisen. Beispielsweise kann die Flachkopfstation eine Ballastmasse aus Betonelementen, aus Metallelementen und insbesondere aus Stahlelementen aufweisen, und insbesondere Stahl besitzt eine hohe Dichte, sodass die Ballastmasse kleinere geometrische Abmessungen aufweist, durch die die Ballastmasse verbessert in die Flachkopfstation integrierbar ist, jedoch ist auch die Verwendung von Betonelementen denkbar. Mehrere Ballastmassen unterschiedlicher Masse können in der Struktur der Flachkopfstation derart angeordnet sein, dass der sich ergebende Gesamtschwerpunkt der Flachkopfstation etwa mittig zwischen den Fahrketten angeordnet ist. Damit wird vermieden, dass eine Fahrkette eine größere Gewichtsbelastung erfährt als eine gegenüberliegende, zweite Fahrkette.

Ein weiteres erfindungswesentliches Merkmal der vorliegenden Erfindung betrifft die Bauhöhe der Flachkopfstation, da die Flachkopfstation endseitig an einer Bandanlage angeordnet werden soll, die mit einem Bandschleifenwagen ausgebildet ist, der in Förderrichtung entlang des Förderbandes verfahren werden kann. Am Bandschleifenwagen kann ein Förderausleger oder eine Förderbrücke mit einem sich an diese anschließenden Förderausleger angeordnet sein. Das Schüttgut, das durch den Bandschleifenwagen vom Förderband entnommen wird, kann über den Förderausleger oder über die Förderbrücke mit dem sich anschließenden Förderausleger in einem seitlichen Abstand zum Förderband entladen werden. Gelangt der Bandschleifenwagen in eine Position angrenzend an die Flachkopfstation, kann es erforderlich sein, dass der Förderausleger oder die Förderbrücke mit dem sich anschließenden Förderausleger von einer ersten Bandseite auf eine gegenüberliegende zweite Bandseite überführt werden muss. Dabei muss der Förderausleger oder die Förderbrücke mit dem sich anschließenden Förderausleger über die Flachkopfstation hinweg geschwenkt werden können.

Folglich ergibt sich das Erfordernis einer flachen Bauweise der Flachkopfstation mit einem Höhenmaß, das die Oberseite des Förderbandbandes oder die Oberseite der Bandgerüstelemente nicht wesentlich überragt und zumindest ein Höhenabstand zur Unterseite zum Förderausleger bzw. zur Förderbrücke einhält. Beispielsweise kann die Oberseite der Flachkopfstation etwa mit der Oberseite des Förderbandes oder mit der Oberseite der Bandgerüstelemente des Förderbandes abschließen. Erst durch die Anforderung an das geringe Höhenmaß der Flachkopfstation ergibt sich das besondere Merkmal des hohen Gewichts der Flachkopfstation, um diese ohne Verankerungsmittel ausführen oder betreiben zu können.

Die Aufgabe der vorliegenden Erfindung wird ferner gelöst durch eine Bandanlage mit wenigstens einer Flachkopfstation und mit einem Förderband, auf dem Schüttgut in einer Förderrichtung förderbar ist, wobei die Flachkopfstation endseitig am Förderband sich auf einem Untergrund abstützend angeordnet ist und auf die eine Bandspannkraft durch das Förderband wirkt, wobei die Flachkopfstation ein Fahrwerk aufweist, mit dem die Flachkopfstation quer zur Förderrichtung auf dem Untergrund verfahrbar ist. Dabei kann ein Bandschleifenwagen vorgesehen sein, der in Förderrichtung entlang des Förderbandes beweglich ist und an dem wenigstens ein Förderausleger oder eine Förderbrücke mit einem sich an diese anschließenden Förderausleger angeordnet ist.

Erfindungsgemäß ist dabei vorgesehen, dass die Flachkopfstation derart flach ausgebildet ist und insbesondere ein Höhenmaß aufweist, das derart bestimmt ist, dass der Förderausleger und/oder die Förderbrücke des Bandschleifenwagens über die Flachkopfstation schwenkbar sind.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht einer Flachkopfstation für eine Bandanlage mit einem Verankerungsmittel gemäß dem Stand der Technik,
- Figur 2: eine Seitenansicht einer erfindungsgemäßen Flachkopfstation für eine Bandanlage mit einem Förderband,
- Figur 3: die erfindungsgemäße Flachkopfstation in einer Draufsicht,
- Figur 4: die erfindungsgemäße Flachkopfstation in einer weiteren Seitenansicht und
- Figur 5: eine schematische Darstellung einer Bandanlage mit einer erfindungsgemäßen Flachkopfstation und einem Bandschleifenwagen, der entlang des Förderbandes verfahrbar ist.

Figur 1 stellt eine Flachkopfstation 100 am Ende einer Bandanlage 1 mit einem Förderband 10 gemäß dem Stand der Technik dar und ist einleitend bereits beschrieben.

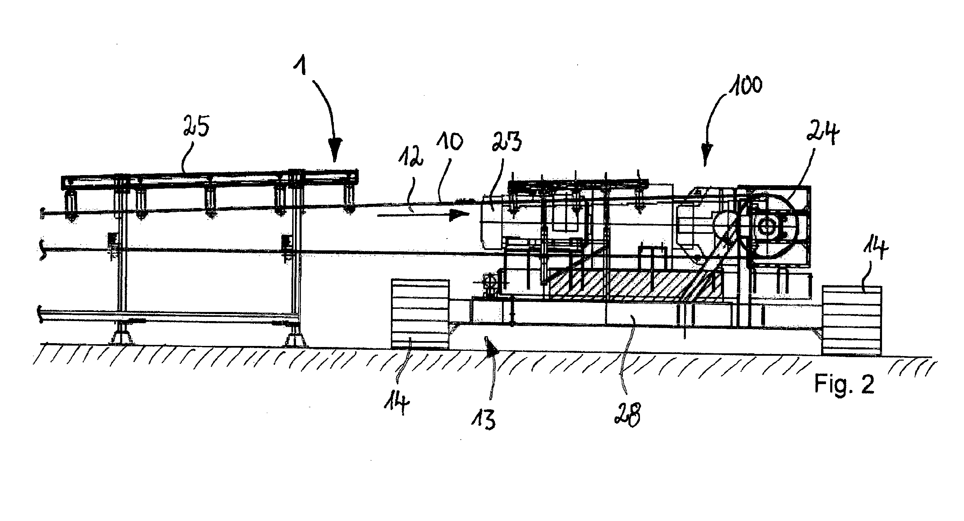

Figur 2 zeigte eine Flachkopfstation 100 für eine Bandanlage 1 mit einem Förderband 10, auf dem nicht näher gezeigtes Schüttgut in einer Förderrichtung 12 förderbar ist. Die Bandanlage 1 kann mehrere Kilometer lang ausgeführt sein, und die Flachkopfstation 100 befindet sich am Ende der Bandanlage 1, und am gegenüberliegenden Ende der Bandanlage kann beispielsweise eine Heckstation angeordnet sein, mit der das Schüttgut auf das Förderband aufgebracht wird. Entlang des Förderbandes 10 zwischen der Heckstation und der gezeigten Flachkopfstation 100 kann ein Bandschleifenwagen verfahren, mit dem das Schüttgut vom Förderband entnommen und beispielsweise auf eine Halde abgegeben wird. Der Bandschleifenwagen fährt dabei zeilenförmig die Länge des Förderbandes 10 ab, indem der Bandschleifenwagen zwischen der Heckstation und der gezeigten Flachkopfstation 100 entlang der Bandanlage 1 hin und her verfährt. Folglich ist die erfindungsgemäße Flachkopfstation 100 gemäß dem gezeigten Ausführungsbeispiel nicht als Station zur Materialübergabe oder Materialablage auf einen Untergrund bestimmt.

Insbesondere stellt die Flachkopfstation 100 eine mechanisch von der Bandanlage 1 entkoppelte Station dar, die vorzugsweise nur zur Umlenkung des Förderbandes 10 und zur Einbringung der Bandspannkraft in das Förderband 10 dient.

Zur Einbringung der Bandspannkraft in das Förderband 10 weist die Flachkopfstation 100 eine Antriebstrommel 24 auf, um die das Förderband 10 teilweise geschlungen ist. Die Antriebstrommel 24 kann als Leerlauftrommel lediglich zum Umlenken des Förderbandes 10 dienen, oder die Antriebstrommel 24, wie vorliegend gezeigt, ist durch eine Bandantriebseinheit 23 angetrieben, sodass die Flachkopfstation 100 gemäß der vorliegenden Erfindung beispielhaft zum Antrieb des Förderbandes 10 dient. Dabei kann auch in der Heckstation ein Antrieb vorgesehen werden, um das Förderband 10 zweifach anzutreiben. Geführt wird das Förderband 10 in Bandgerüstelementen 25, von denen lediglich ein einziges gezeigt ist und entlang der Förderrichtung 12 kann eine Vielzahl von Bandgerüstelementen 25 zur Aufnahme und zur Führung des Förderbandes 10 in aufeinanderfolgender Anordnung vorgesehen sein, ohne dass das letzte Bandgerüstelement 25 vor der Flachkopfstation 100 eine direkte Verbindung mit der Flachkopfstation 100 aufweist, sodass die Flachkopfstation 100 insbesondere freistehend ausgeführt ist.

Die Flachkopfstation 100 weist erfindungsgemäß ein Fahrwerk 13 auf, mit dem die Flachkopfstation 100 quer zur Förderrichtung 12 verfahrbar ist. Das Fahrwerk 13 ist im Wesentlichen durch zwei Fahrketten 14 gebildet, und die Fahrketten 14 können durch eine nicht näher gezeigte Fahrantriebseinheit angetrieben sein, sodass sich die Flachkopfstation 100 selbsttätig fortbewegen kann. Auf der unteren Seite weist die Flachkopfstation 100 als Teil des Fahrwerkes 13 ein Fahrgestell 28 auf, das anstelle des Pontons 27 gemäß dem Stand der Technik (siehe hierzu Figur 1) angeordnet ist. Im Fahrgestell 28 kann die Fahrantriebseinheit integriert sein. Die Fahrtrichtung, in der die Flachkopfstation 100 mit dem Fahrwerk 13 verfahren kann, verläuft quer zur Förderrichtung 12 des Förderbandes 10, und das Fahrwerk 13 weist zwei Fahrketten 14 auf, die sich in der Querrichtung zur Förderrichtung 12 erstrecken. Dabei können beide Fahrketten 14 einzeln angetrieben werden, um die Flachkopfstation 100 in einen gewissen Winkelbereich lenkbar auszugestalten.

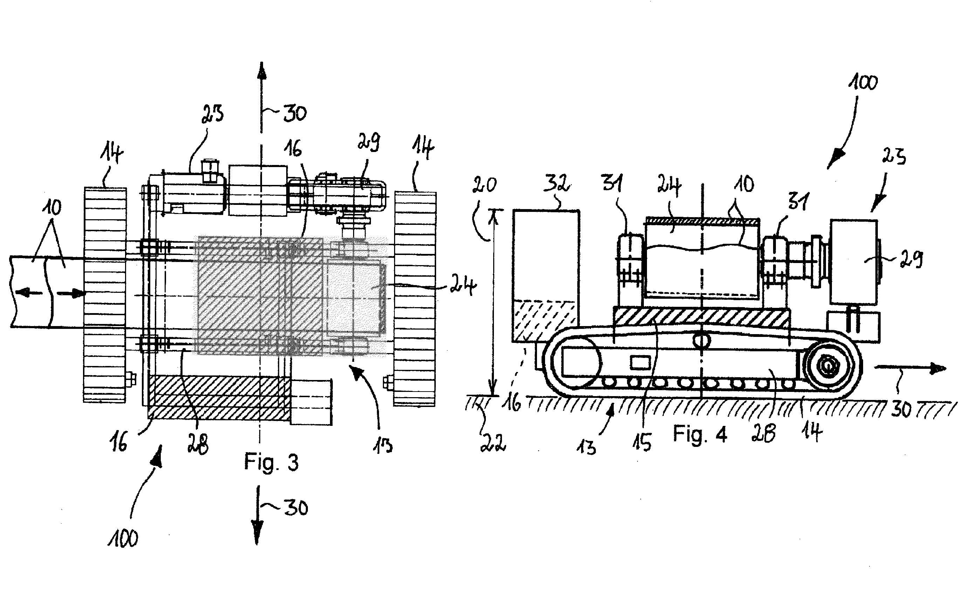

Figur 3 zeigt die Flachkopfstation 100 in einer Draufsicht, und an die Flachkopfstation 100 ist ein Förderband 10 angeordnet. Das Förderband 10 umschlingt eine Antriebstrommel 24 etwa mit einem Winkel von 180°, und die Antriebstrommel 24 ist über eine Getriebeeinheit 29 mit einer Bandantriebseinheit 23 verbunden. Somit kann die durch die Pfeile angedeutete Bewegung in das Förderband 10 eingebracht werden, und dargestellt sind ein Obergurt und ein Untergurt, wobei der Obergurt auf die Antriebstrommel 24 zuläuft und der Untergurt läuft von der Antriebstrommel 24 ab.

Das Fahrwerk 13 der Flachkopfstation 100 besitzt ein Fahrgestell 28 und Fahrketten 14. Das Fahrgestell 28 erstreckt sich im Wesentlichen zwischen den Fahrketten 14. die parallel und beabstandet zueinander am Fahrgestell 28 angeordnet sind. Durch das erfindungsgemäß vorgesehene Fahrwerk 13 kann die Flachkopfstation 100 mit angetriebenen Fahrketten 14 in den gezeigten Fahrtrichtungen 30 verfahren.

Die Flachkopfstation 100 weist eine Gesamtmasse auf, die derart bestimmt ist, dass die Flachkopfstation 100 auch bei Einbringen der Bandspannkraft in das Förderband 10 eine ortsfeste Position beibehält, ohne dass an die Flachkopfstation 100 Verankerungsmittel 21 angeordnet wären. Um die Gesamtmasse der Flachkopfstation 100 zu erreichen, ist die weitere Anordnung des Fahrwerks 13 an eine aus dem Stand der Technik bekannte Flachkopfstation 100 (siehe hierzu Figur 1) nicht ausreichend. Die erfindungsgemäße Flachkopfstation 100 weist daher Ballastmassen 15 und 16 auf, wobei eine zentrale Ballastmasse 15 etwa mittig zwischen den Fahrketten 14 angeordnet ist, und eine weitere Ballastmasse 16 ist als Gegengewicht zur massebehafteten Bandantriebseinheit 23 in seitlicher Anordnung an die Flachkopfstation 100 angebracht. Damit wird erreicht, dass der Gesamtschwerpunkt der Flachkopfstation 100 etwa zentral zwischen den Fahrketten 14 angeordnet ist, um die Fahrketten 14 gleichmäßig mechanisch zu belasten.

Figur 4 zeigt eine weitere Seitenansicht der Flachkopfstation 100 aus der Förderrichtung, in die sich das Förderband 10 erstreckt, das in geschnittener Weise auf der Antriebstrommel 24 angeordnet gezeigt ist. Die Antriebstrommel 24 ist in einer Trommellagerung 31 drehbar aufgenommen und seitlich durch die Bandantriebseinheit 23 mit der Getriebeeinheit 29 angetrieben. Auf der gegenüberliegenden Seite der Bandantriebseinheit 23 befindet sich die Ballastmasse 16, vor der sich eine Elektroschalteinheit 32 befindet. Weist die Flachkopfstation 100 zwei Bandantriebseinheiten 23 auf, kann durch eine zweite Bandantriebseinheit 23 bereits eine weitere Masse gebildet sein und die Ballastmasse 16 als Gegengewicht zur ersten Bandantriebseinheit 23 kann entfallen.

Unterseitig weist die Flachkopfstation 100 das Fahrwerk 13 mit den Fahrketten 14 auf, mit denen die Flachkopfstation 100 in Fahrtrichtung 30 bewegt werden kann. Dabei ist erkennbar, dass die Fahrkette 14 auf dem Fahrgestell 28 aufgenommen und mit diesem in nicht näher gezeigter Weise angetrieben ist.

Zentral über der Fahrkette 14 befindet sich die zentrale Ballastmasse 15 zur Erreichung des erfindungsgemäß erforderlichen Gesamtgewichtes der Flachkopfstation 100.

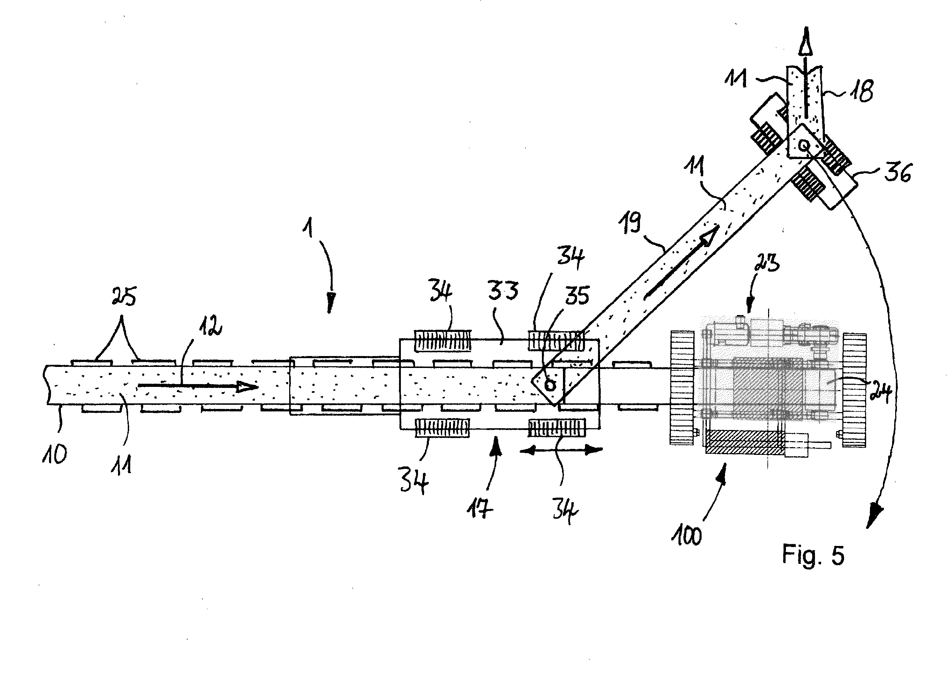

Die Flachkopfstation 100 zeichnet sich ferner durch eine geringe Höhe aus, die durch das Höhenmaß 20 über dem Untergrund 22 bestimmt ist. Die Flachkopfstation 100 findet erfindungsgemäß für Bandanlagen 1 Anwendung, die einen Bandschleifenwagen aufweisen, der in Förderrichtung entlang des Förderbandes 10 beweglich ist und an dem wenigstens ein Förderausleger oder eine Förderbrücke mit einem sich an diese anschließenden Förderausleger angeordnet ist. Dabei soll erfindungsgemäß ermöglicht sein, dass sich der Förderausleger oder die Förderbrücke mit dem sich anschließenden Förderausleger über der Flachkopfstation 100 hinweg verschwenkt werden kann. Erfindungsgemäß weist daher die Flachkopfstation 100 ein Höhenmaß 20 auf, das derart bestimmt ist, dass die Gesamtbauhöhe der Flachkopfstation 100 über dem Untergrund 20 die Höhe des oberen Punktes des Förderbandes 10 auf der Antriebstrommel 24 nicht wesentlich übersteigt. Erst dadurch kann der Förderausleger oder die Förderbrücke mit dem sich anschließenden Förderausleger des Bandschleifenwagens über der Flachkopfstation 100 hinweg verschwenkt werden. Zur Verdeutlichung der Anordnung eines Bandschleifenwagens in der Bandanlage 1 und die Anordnung der Flachkopfstation 100 relativ zum Bandschleifenwagen ist in der folgenden Figur 5 näher dargestellt.

Figur 5 zeigt eine Bandanlage 1 mit einer Flachkopfstation 100 gemäß der vorliegenden Erfindung. Die Flachkopfstation 100 befindet sich am Ende der Bandanlage 1 und treibt das Förderband 10 beispielhaft mit der Antriebstrommel 24 und der mit dieser zusammenwirkenden Bandantriebseinheit 23 an. Die Flachkopfstation 100 kann jedoch auch das Förderband 10 über die Antriebstrommel 24 lediglich umlenken, ohne dass die Flachkopfstation 100 eine Bandantriebseinheit 23 aufweisen würde. Erfindungsgemäß ist die Flachkopfstation 100 nicht zur Übergabe oder zum Abladen des Schüttgutes 11 auf dem Förderband 10 vorgesehen. Das Förderband 10 erreicht somit die Flachkopfanlage 100 ohne das Schüttgut 11, welches zuvor von einem Bandschleifenwagen 17 vom Förderband 10 entfernt wurde.

Der Bandschleifenwagen 17 kann in gezeigter Pfeilrichtung entlang der Förderrichtung 12 des Förderbandes 10 hin und her verfahren. Der Bandschleifenwagen 17 weist eine Verfahreinheit 33 auf, die über Fahrketten 34 verfügt, jedoch kann die Verfahreinheit 33 auch auf Schienen verfahren, die an den Bandgerüstelementen 25 zur Aufnahme und Führung des Förderbandes 10 angeordnet sein können.

Am Bandschleifenwagen 17 ist eine Förderbrücke 19 drehbar angeordnet, die um einen Drehpunkt 35 in gezeigter Pfeilrichtung verschwenken kann. Am Ende der Förderbrücke 19 befindet sich eine weitere Verfahreinheit 36, auf der die Förderbrücke 19 endseitig aufliegt. An den Auflagepunkt der Förderbrücke 19 auf der Verfahreinheit 36 ist ein Förderausleger 18 angeordnet, über den das Schüttgut 11, das vom Förderband 10 auf die Förderbrücke 19 und von der Förderbrücke 19 an den Förderausleger 18 übergeben wird, abgeladen werden kann. Die Förderrichtung des Schüttgutes 11 vom Förderband 10 bis zum Förderausleger 18 ist über Pfeile angedeutet.

Die Förderbrücke 19 kann unter gleichzeitigem Verfahren der Verfahreinheit 36 über die Flachkopfstation 100 hinweg schwenken, um beispielsweise von einer ersten Seite der Bandanlage 1 auf eine zweite, gegenüberliegende Seite der Bandanlage 1 zu verfahren. Dabei muss die Förderbrücke 19 die Flachkopfstation 100 in angedeuteter Pfeilrichtung überstreichen, und die Flachkopfstation 100 ist derart flach ausgebildet, dass die Förderbrücke 19 kollisionsfrei über die Flachkopfstation 100 hinwegschwenken kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein. Insbesondere kann die Flachkopfstation 100 auch lediglich zur Umlenkung des Förderbandes 10 durch eine Trommel dienen, wobei zugleich die erforderliche Bandspannkraft vom Förderband 10 gehalten werden kann. Dabei entfällt jedoch die Bandantriebseinheit 23, die als Bestandteil der Flachkopfstation 100 dargestellt ist. Insbesondere kann der Untergrund 22, gezeigt in den Figuren 2 und 4, als Planum ausgeführt sein, und die Bandgerüstelemente 25 zur Führung und Aufnahme des Förderbandes 10, der Bandschleifenwagen 17 und die Flachkopfstation 100 befinden sich auf einer Ebene, die durch den planen Untergrund 22 gebildet ist. Dabei kann beispielsweise lediglich in seitlicher Anordnung eine terrassenartig ausgebildete Topographie der Einsatzumgebung der Bandanlage 1 vorherrschen, und die Flachkopfstation 100 ist auf der gleichen Ebene des Untergrundes 22 aufgestellt wie auch die Bandgerüstelemente 25. Folglich kann auch der Bandschleifenwagen 17 auf der gleichen Höhe verfahren, wie die Flachkopfstation 100 in seitlicher Fahrtrichtung 30 verfahren kann.

### Bezugszeichenliste

- 100: Flachkopfstation

- 1: Bandanlage

- 10: Förderband
- 11: Schüttgut
- 12: Förderrichtung
- 13: Fahrwerk
- 14: Fahrkette
- 15: Ballastmasse
- 16: Ballastmasse
- 17: Bandschleifenwagen
- 18: Förderausleger
- 19: Förderbrücke
- 20: Höhenmaß
- 21: Verankerungsmittel
- 22: Untergrund
- 23: Bandantriebseinheit
- 24: Antriebstrommel
- 25: Bandgerüstelement
- 26: Abspannung
- 27: Ponton
- 28: Fahrgestell
- 29: Getriebeeinheit
- 30: Fahrtrichtung
- 31: Trommellagerung
- 32: Elektroschalteinheit
- 33: Verfahreinheit
- 34: Fahrketten
- 35: Drehpunkt
- 36: Verfahreinheit

## Patentansprüche

1. Flachkopfstation (100) für eine Bandanlage (1) mit einem Förderband (10), auf dem Schüttgut (11) in einer Förderrichtung (12) förderbar ist, wobei die Flachkopfstation (100) endseitig am Förderband (10) sich auf einem Untergrund (22) abstützend anordbar ist und auf die eine Bandspannkraft durch das Förderband (10) wirkt, **dadurch gekennzeichnet, dass** die Flachkopfstation (100) ein Fahrwerk (13) aufweist, mit dem die Flachkopfstation (100) quer zur Förderrichtung (12) auf dem Untergrund (22) verfahrbar ist.

2. Flachkopfstation (100) nach Anspruch 1, **dadurch gekennzeichnet, dass** das Fahrwerk (13) der Flachkopfstation (100) Fahrketten (14) aufweist, die sich insbesondere quer zur Förderrichtung (12) erstrecken.

3. Flachkopfstation (100) nach Anspruch 1 oder 2, **dadurch gekennzeichnet, dass** das Fahrwerk (13) angetrieben ist, sodass die Flachkopfstation (100) selbstfahrend ausgeführt ist, insbesondere dass die Flachkopfstation (100) eine vorzugsweise elektrische Fahrantriebseinheit aufweist.

4. Flachkopfstation (100) nach einem der Ansprüche 1 bis 3, **dadurch gekennzeichnet, dass** die Flachkopfstation (100) eine Gesamtmasse aufweist, die derart bestimmt ist, dass die Flachkopfstation (100) auch bei Aufbringen der Bandspannkraft eine ortsfeste Position beibehält, insbesondere frei von Verankerungsmitteln (21) die ortsfeste Position beibehält.

5. Flachkopfstation (100) nach einem der vorgenannten Ansprüche, **dadurch gekennzeichnet, dass** die Gesamtmasse der Flachkopfstation (100) größer ist als der Quotient aus Bandspannkraft/Reibungskoeffizient des Untergrundes (22).

6. Flachkopfstation (100) nach einem der vorgenannten Ansprüche, **dadurch gekennzeichnet, dass** die Flachkopfstation (100) wenigstens eine Ballastmasse (15, 16) aufweist.

7. Flachkopfstation (100) nach Anspruch 6, **dadurch gekennzeichnet, dass** die Ballastmasse (15, 16) aus Betonelementen, aus Metallelementen und insbesondere aus Stahlelementen gebildet ist.

8. Flachkopfstation (100) nach einem der vorgenannten Ansprüche, **dadurch gekennzeichnet, dass** wenigstens eine Bandantriebseinheit (23) vorgesehen ist, mit der das Förderband (10) insbesondere mittels einer vom Band teilumschlungenen Antriebstrommel (24) angetrieben ist.

9. Bandanlage (1) mit wenigstens einer Flachkopfstation (100) und mit einem Förderband (10), auf dem Schüttgut (11) in einer Förderrichtung (12) förderbar ist, wobei die Flachkopfstation (100) endseitig am Förderband (10) sich auf einem Untergrund (22) abstützend angeordnet ist und auf die eine Bandspannkraft durch das Förderband wirkt,
**dadurch gekennzeichnet, dass** die Flachkopfstation (100) ein Fahrwerk (13) aufweist, mit dem die Flachkopfstation (100) quer zur Förderrichtung (11) auf dem Untergrund (22) verfahrbar ist.

10. Bandanlage (1) nach Anspruch 9, **dadurch gekennzeichnet, dass** ein Bandschleifenwagen (17) vorgesehen ist, der in Förderrichtung (12) entlang des Förderbandes (10) beweglich ist und an dem wenigstens
- ein Förderausleger (18)
oder
- eine Förderbrücke (19) mit einem sich an diese anschließenden Förderausleger (18)
angeordnet ist.

11. Bandanlage (1) nach Anspruch 10, **dadurch gekennzeichnet, dass** die Flachkopfstation (100) derart flach ausgebildet ist und insbesondere ein Höhenmaß (20) aufweist, das derart bestimmt ist, dass der Förderausleger (18) und/oder die Förderbrücke (19) des Bandschleifenwagens (17) über die Flachkopfstation (100) schwenkbar sind.

12. Bandanlage (1) gemäß einem der Ansprüche 9 bis 11 mit einer Flachkopfstation (100) gemäß einem der Ansprüche 2 bis 9.

## Claims

1. A flat head station (100) for a belt conveyor system (1) with a conveyor belt (10), on which bulk material (11) can be conveyed in a conveying direction (12), wherein the flat head station (100) can be arranged at an end of the conveyor belt (10) while being supported on a base (22) and the conveyor belt (10) exerts a belt tension force upon the flat head station (100),
**characterized in that** the flat head station (100) features a chassis (13), by means of which the flat head station (100) can be moved on the base (22) transverse to the conveying direction (12).

2. The flat head station (100) according to Claim 1, **characterized in that** the chassis (13) of the flat head station (100) features track sets (14) that extend, in particular, transverse to the conveying direction (12).

3. The flat head station (100) according to Claim 1 or 2, **characterized in that** the chassis (13) is driven such that the flat head station (100) is performed self-propelled, wherein the flat head station (100) particularly features a preferably electric drive unit.

4. The flat head station (100) according to one of Claims 1 to 3, **characterized in that** the flat head station (100) features an overall mass that is defined such that the flat head station (100) also maintains a stationary position when it is forced by the belt tension force, particularly maintains the stationary position while missing any anchoring means (21).

5. The flat head station (100) according to one of the preceding claims, **characterized in that** the overall mass of the flat head station (100) is greater than the quotient of belt tension force/coefficient of friction of the base (22).

6. The flat head station (100) according to one of the preceding claims, **characterized in that** the flat head station (100) features at least one ballast mass (15, 16).

7. The flat head station (100) according to Claim 6, **characterized in that** the ballast mass (15, 16) is formed by concrete elements, of metal elements and, in particular, of steel elements.

8. The flat head station (100) according to one of the preceding claims, **characterized in that** at least one belt drive unit (23) is provided, by means of which the conveyor belt (10) is driven, particularly by means of a driving drum (24), around part of which the belt is wrapped.

9. A belt conveyor system (1) with at least one flat head station (100) and with a conveyor belt (10), on which bulk material (11) can be conveyed in a conveying direction (12), wherein the flat head station (100) is arranged at an end of the conveyor belt (10) while being supported on a base (22) and the conveyor belt exerts a belt tension force upon the flat head station (100),
**characterized in that** the flat head station (100) features a chassis (13), by means of which the flat head station (100) can be moved on the base (22) transverse to the conveying direction (11).

10. The belt conveyor system (1) according to Claim 9, **characterized in that** a tripper car (17) is provided that can be moved along the conveyor belt (10) in the conveying direction (12) and on which at least
- one conveying boom (18)
or
- one conveying bridge (19) with a downstream conveying boom (18) is arranged.

11. The belt conveyor system (1) according to Claim 10, **characterized in that** the flat head station (100) is formed with such a flat design and, in particular, has a vertical dimension (20) that is defined in such a way that it is possible to swing the conveying boom (18) and/or the conveying bridge (19) of the tripper car (17) over the flat head station (100).

12. The belt conveyor system (1) according to one of Claims 9 to 11 with a flat head station (100) according to one of Claims 2 to 9.

## Revendications

1. Poste à tête plate (100) pour une installation à bande (1) comprenant une bande transporteuse (10) sur laquelle de la marchandise en vrac (11) peut être transportée dans un sens de transport (12), sachant que le poste à tête plate (100) peut être disposé en appui sur un fond (22) à l'extrémité sur la bande transporteuse (10), et sur lequel une force de serrage de bande agit à travers la bande transporteuse (10), **caractérisé en ce que** le poste à tête plate (100) présente un mécanisme de roulement (13) avec lequel le poste à tête plate (100) peut rouler sur le fond (22) transversalement au sens de transport (12).

2. Poste à tête plate (100) selon la revendication 1, **caractérisé en ce que** le mécanisme de roulement (13) du poste à tête plate (100) présente des chaînes de roulement (14) qui s'étendent particulièrement transversalement au sens de transport (12).

3. Poste à tête plate (100) selon la revendication 1 ou 2, **caractérisé en ce que** le mécanisme de roulement (13) est entraîné, de telle sorte que le poste à tête plate (100) est conçu auto-roulant, en particulier **en ce que** le poste à tête plate (100) présente une unité d'entraînement de roulement électrique de préférence.

4. Poste à tête plate (100) selon l'une des revendications 1 à 3, **caractérisé en ce que** le poste à tête plate (100) présente une masse totale qui est ainsi définie que le poste à tête plate (100) conserve une position fixe même lorsque la force de serrage de bande est appliquée, conserve en particulier la position fixe sans moyens d'ancrage (21).

5. Poste à tête plate (100) selon l'une des revendications précédentes, **caractérisé en ce que** la masse totale du poste à tête plate (100) est supérieure au quotient de force de serrage de bande/coefficient de frottement du fond (22).

6. Poste à tête plate (100) selon l'une des revendications précédentes, **caractérisé en ce que** le poste à tête plate (100) présente au moins une masse de ballast (15, 16).

7. Poste à tête plate (100) selon la revendication 6, **caractérisé en ce que** la masse de ballast (15, 16) est conçue en éléments de béton, en éléments métalliques et en particulier en éléments d'acier.

8. Poste à tête plate (100) selon l'une des revendications précédentes, **caractérisé en ce qu'**au moins une unité d'entraînement de bande (23) est prévue, avec laquelle la bande transporteuse (10) est entraînée en particulier au moyen d'un tambour d'entraînement (24) partiellement entouré par la bande.

9. Installation à bande (1) comprenant au moins un poste à tête plate (100) et une bande transporteuse (10) sur laquelle de la marchandise en vrac (11) peut être transportée dans un sens de transport (12), sachant que le poste à tête plate (100) peut être disposé en appui sur un fond (22) à l'extrémité sur la bande transporteuse (10), et sur lequel une force de serrage de bande agit à travers la bande transporteuse,
**caractérisée en ce que** le poste à tête plate (100) présente un mécanisme de roulement (13) avec lequel le poste à tête plate (100) peut rouler sur le fond (22) transversalement au sens de transport (11).

10. Installation à bande (1) selon la revendication 9, **caractérisée en ce qu'**un chariot verseur (17) est prévu, qui est mobile le long de la bande transporteuse (10) dans le sens de transport (12) et sur lequel est disposé(e) au moins
- une potence de transport (18)
ou
- un pont de transport (19) avec une potence de transport (18) se raccordant sur celui-ci.

11. Installation à bande (1) selon la revendication (10), **caractérisé en ce que** le poste à tête plate (100) est ainsi conçu plat et présente en particulier une élévation (20) qui est ainsi définie que la potence de transport (18) et/ou le pont de transport (19) du chariot verseur (17) peu(ven)t basculer au-dessus du poste à tête plate (100).

12. Installation à bande (1) selon l'une des revendications 9 à 11, comprenant un poste à tête plate (100) selon l'une des revendications 2 à 9.
